# EUROPEAN PATENT APPLICATION

(11) **EP 3 124 338 A1**
(43) Date of publication of application: **01.02.2017**
(21) Application number: 16180674.0
(22) Date of filing: 22.07.2016
(51) Int. Cl.: B60S 1/48

(54) **WINDSCREEN WASHER LIQUID DISTRIBUTION AND HEATING SYSTEM FOR WINDSCREEN WIPERS**

(30) Priority: 27.07.2015 FR 1557131
(71) Applicant: Valeo Systèmes d'Essuyage, 78322 Le Mesnil Saint Denis (FR)
(72) Inventor: CAILLOT, Gérald, 78720 CERNAY LA VILLE (FR)
(74) Representative: Vincent, Catherine Marie Marguerite

(57) **Abstract**

System for distributing washing liquid in a cleaning device comprising two sets of nozzles, which system includes a first secondary pipe (6) and a second secondary pipe (7) for feeding the washing liquid to the nozzles, which first and second secondary pipes, hydraulically connected to a main pipe (3) extending from a washing liquid tank (4), each include at least one circulation tube (11, 12) for the washing liquid and a conductive element (13) embedded in its mass, characterized in that at least one heat dissipator apparatus (15) is provided in at least one of the two secondary pipes.

## Description

The invention primarily concerns a system for distributing and heating washing liquid in a cleaning device to be mounted on a vehicle , notably a motor vehicle. The invention concerns in particular such a system for a window wiper device of a vehicle The invention also relates to a vehicle equipped with at least one such system.

By "washing liquid", the present invention means any liquid known to the person skilled in the art suitable to be used in a cleaning device to be mounted on a vehicle, in particular any windscreen washer liquid.

Depending on the embodiment, the washing liquid may be distributed either via fixed nozzles disposed in the vicinity of the junction of the bonnet and the window to be wiped or at the level of nozzles on the wiper blades, which makes it possible to provide rapid wiping of the washing liquid sprayed onto the window, reducing the time interval during which the view of the driver is reduced because of the presence of the washing liquid on the windscreen.

In either of these layouts of the nozzles, heating the washing liquid if the latter is at a temperature below a threshold temperature, for example 5°C, makes it possible to ensure optimum functioning of the cleaning device even at the time of low temperatures of winter conditions.

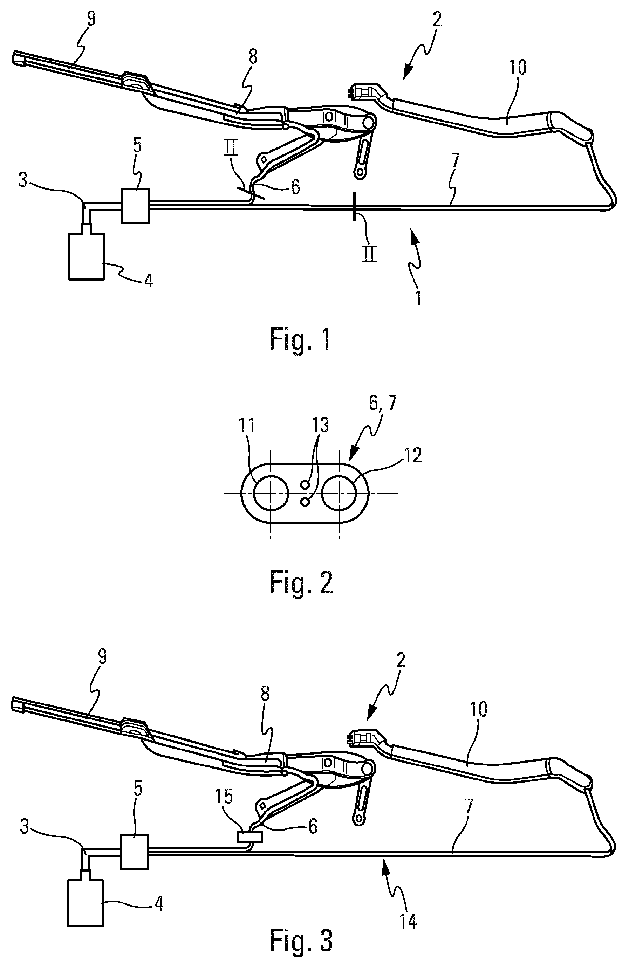

Referring to Figure 1, a prior art in the form of a windscreen washer liquid distribution and heating system 1 integrated into a motor vehicle window wiper system 2 includes a primary washing liquid feed pipe 3 that extends from a washing liquid tank 4 and, via a pump that is not shown, where applicable accompanied by non-return valves 5, transports the washing liquid to a first secondary pipe 6 and a second secondary pipe 7 that are hydraulically connected to the main pipe 3.

The first pipe 6 is integrated into the arm 8 of a first wiper blade 9 situated closer to the main pipe 3 while the second pipe 7 is integrated into a arm 10 of the wiper blade that cannot be seen in this figure, farther from the main pipe 3.

The relative disposition of the first wiper 9 and the second wiper to wipe the surface of a windscreen is readily understandable. This disposition leads to a length difference between the first pipe 6 and the second pipe 7. Here, in the example shown in figure 1, the first pipe 6 is shorter than the second pipe 7.

Figure 2 is a view in section taken on the section line II in figure 1 of the first pipe 6 and the second pipe 7.

Each of the first and second pipes 6, 7 includes two tubes 11, 12 for feeding the windscreen washer liquid to the nozzles of two sprayer ramps provided on each of the wiper blades. The presence of these two sprayer ramps enables distribution of the windscreen washer liquid on each side of the wiper blade according to the direction in which that wiper is moving, further reducing the time interval during which the view of the driver is reduced. The context of the invention is not limited to the use of two windscreen washer liquid feed tubes per wiper blade as a single liquid feed tube may equally well be provided if each wiper blade includes only one sprayer ramp.

As can be seen in Figure 2, the first pipe 6 and the second pipe 7 may each further include a conductive wire 13 that is embedded in the mass of the pipe 6, 7 concerned and is duplicated to provide for its electrical connection, most often situated at the level of the non-return valves 5. The conductive wire 13 is used to transport current to the windscreen wiper blade and/or to heat the windscreen washer liquid transported in the pipe 6, 7 concerned when the ambient temperature is low.

The difference in length of the first pipe 6 and the second pipe 7 explained above also leads to a difference in length of each of the conductive wires 13 of the first and second pipes 6, 7.

Accordingly, the use of conductive wires of the same resistivity for the first pipe 6 and the second pipe 7 is not able to provide an equivalent power per unit length of the first pipe 6 and the second pipe 7 to bring about homogeneous heating of the windscreen washer liquid at the level of the two wiper blades.

In this context, the present invention is aimed at a windscreen washer liquid distribution and heating system enabling homogeneous heating of the washing liquid fed to separate sets of nozzles, employing means that are simple to implement.

To this end, the system of the invention for distributing washing liquid includes first and second pipes for feeding the washing liquid to the nozzles, and these first and second secondary pipes, hydraulically connected to a main pipe extending from a washing liquid tank, each include at least one circulation tube for the washing liquid and a conductive element embedded in its mass. In accordance with the invention, at least one heat dissipator apparatus is provided in one of the two secondary pipes.

The system of the invention may also include the following optional features separately or in any technically feasible combination:
- the first secondary pipe is shorter than the second secondary pipe because of the relative position of the corresponding nozzles relative to the main pipe, said at least one heat dissipator apparatus being provided on at least the shorter first secondary pipe.
- the heating conductor of the first pipe and the heating conductor of the second pipe have the same resistivity.
- the heat dissipator apparatus is a resistance so as to confer a greater total resistance on the first pipe relative to the second pipe.
- the value of the resistance is chosen taking into account the resistivity and the respective length of the first and second heating conductors in order to obtain a power per unit length of the first and second heating pipes in a particular value range, the lower value of that range being determined as the minimum power per unit length to be complied with to ensure sufficient heating of the washing liquid in the pipe while the upper value of this range is determined as the maximum power per unit length beyond which overheating of the pipe is to be feared. By way of nonlimiting example, the value range may be between 25 watts per metre and 40 watts per metre inclusive.
- the value of the resistance is chosen taking into account the resistivity of the first and second heating conductors in order to obtain a resistance per unit length of the first and second heating pipes of approximately 30 watts per metre.
- the heat dissipator apparatus is a positive temperature coefficient stone.
- each wiper includes at least one sprayer ramp and each of the first and second pipes includes at least one tube for circulating the liquid to feed the at least one sprayer ramp of the wiper concerned with washing liquid.
- the heat evacuated by the heat dissipator apparatus is recovered to heat at least one apparatus of said windscreen washer distribution system.
- the heat recovered from the heat dissipator apparatus is used to heat the washing liquid tank, the pump, the main pipe and/or the first and second secondary pipes, the hydraulic connector between these various pipes, and/or the nozzles of the wipers.
- the primary and/or secondary pipes may be realized in a thermo conductor material or not.

The invention also relates to an assembly comprising a cleaning device for a vehicle and a system for distributing washing liquid according to the invention.

The cleaning device of the assembly may be a wiper device comprising two wipers, each wiper including at least one sprayer ramp carrying a nozzle. For example, each of the first pipe and the second pipe includes at least one tube for circulating the liquid to feed said at least one sprayer ramp of the wiper concerned with windscreen washer liquid.

The invention also relates to a motor vehicle equipped with at least one such system.

Other features and advantages of the invention will emerge clearly from the description thereof given below by way of nonlimiting example and with reference to the appended drawings, in which:
- Figure 1, already described, is a diagrammatic perspective view of a windscreen washer liquid distribution and heating system in a vehicle window wiper device,
- Figure 2, already described, is a view in section taken along the section line II in Figure 1, and
- Figure 3 is a diagrammatic perspective view of the washing liquid distribution and heating system in accordance with the invention.

In accordance with the invention, a heat dissipator apparatus is arranged on at least one of the secondary pipes for feeding the washing liquid and the conductive wires associated with each secondary pipe have substantially the same resistivity. In the example shown, a heat dissipator apparatus is arranged on only one secondary pipe, the shorter one. Clearly a heat dissipator apparatus could be disposed on each of the secondary pipes and the amount of heat dissipated by each apparatus set as a function of the size of the respective conductive wire on which these apparatuss are installed.

Referring to Figure 3, the same references as in Figure 1 being used again for clarity, the washing liquid distribution and heating system 14 in accordance with the invention includes an additional resistance 15 that is arranged on the shorter first pipe 6.

By increasing the total resistance of the first pipe 6, this additional resistance 15 makes it possible to be able to use conductive wires 13 of the same resistivity in the first pipe 6 and the second pipe 7 while conferring an equivalent power per unit length on these two pipes 6, 7 of different lengths.

Table 1 below sets out indicative values of the powers per unit length in the two secondary pipes 6, 7 in the prior art and in the context where the invention provides an additional resistance 15 on the shorter first pipe 6.

**Table 1**

| | Resistivity of the conductive wire of the first pipe 6 (Ω/m) | Additional resistance (Ω) | Resistivity of the conductive wire of the second pipe 7 (Ω/m) | Power per unit length of the first pipe 6 (W/m) | Power per unit length of the second pipe 7 (W/m) |
|---|---|---|---|---|---|
| Prior art | 0.9 | - | 0.9 | 80.72 | 30.74 |
| | 2.4 | - | 2.4 | 30.74 | 11.53 |
| | 2.4 | - | 0.9 | 30.74 | 30.74 |
| Invention | 0.9 | 3.3 | 0.9 | 30.61 | 30.74 |

A minimum power per unit length in the two pipes 6, 7 between 25 watts per metre and 40 watts per metre inclusive is aimed at, preferably approximately 30 watts per metre. This power per unit length makes it possible to confer on the washing liquid the power necessary to deice the windscreen if the temperature of the washing liquid is below 5°C without causing ove rheating.

It is found that the use in the prior art system of conductive wires having a resistivity of 0.9 ohm per metre can lead to a power per unit length of approximately 30 watts per metre for the longer second pipe 7 but also an excessive power per unit length of 80 watts per metre for the first pipe 6.

Conversely, a resistivity of the two conductive wires greater than 2.4 ohms per metre can lead to a power per unit length of approximately 30 watts per metre for the shorter first pipe 6 but also to an insufficient power per unit length of 11.5 watts per metre for the second pipe 7.

To obtain a power per unit length of approximately 30 watts per metre in the first pipe 6 and the second pipe 7 it is therefore necessary to use conductive wires of different resistivity, i.e. a conductive wire having a resistivity of 2.4 ohms per metre for the first pipe 6 and a conductive wire having a resistivity of 0.9 ohm per metre for the second pipe 7.

This latter configuration is disadvantageous because the lengths of the first pipe 6 and the second pipe 7 may need to change according to the vehicle model and the configuration of the windscreen. In fact, the relative position of the wiper blades is adapted to suit the configuration of each windscreen. This results in the use for each windscreen configuration of a conductive wire having a certain resistivity and a conductive wire having another resistivity.

In accordance with the invention, and as can be seen in Table 1, the use of an additional resistance 15 on the shorter first pipe 6 makes it possible to be able to use the same resistive wires in the first pipe 6 and the second pipe 7 whilst providing powers per unit length within the required range of values (here 25 to 40 watts per metre, for example) for both pipes 6, 7.

The additional resistance 15 may be replaced by any heat dissipator apparatus known to the person skilled in the art. For example, one or more positive temperature coefficient (PTC) stones could be used on the pipe or pipes for which the power per unit length is to be controlled, and this time the size of the stones modified to adjust the heat dissipation and therefore the power per unit length of the pipe according to the dimension of the corresponding conductive wire.

The use of a heat dissipator apparatus makes it possible to standardize the conductive wire to be inserted in the liquid feed pipes from one vehicle application to another and thereby to avoid having to provide conductive wires with different resistivities.

This aim of standardizing the conductive element to be inserted in the secondary washing liquid feed pipes may encourage the use of heat dissipator apparatus on each secondary pipe.

Moreover, in accordance with the invention, the heat dissipated by the dissipator apparatus, whether that heat is produced by a single dissipator apparatus mounted on a single pipe as described above, notably the shorter one, or produced by a plurality of separate dissipator apparatus mounted on each of the pipes, may be used to heat at least one element of the washing liquid distribution and heating system.

In this regard, there may be cited for example and not by limitation the washingliquid tank, the pump, the non-return valves, the main pipe, the secondary pipes, the hydraulic connector and/or the nozzles, whether they are fixed or not, for example on the wipers.

It is to be noted that the invention should not be deemed to be limited to the means and configurations described and shown, but that it applies equally to all equivalent means or configurations and any combination of such means. Variant embodiments could be applied without departing from the context of the invention, provided that a heat dissipator apparatus is disposed on at least one of the washing liquid feed pipes to modify the power per unit length of that pipe and to make it appropriate in relation to the power per unit length of the other liquid feed pipe.

Without being exhaustive, by way of envisaged variants there may be mentioned specific heat dissipator apparatus, as already referred to, and numbers of them could be installed on one and/or the other of the liquid feed pipes.

These windscreen washer liquid distribution and heating systems could be applied to nozzles on the windscreen wiper blades as described or fixed nozzles disposed at the periphery of the window to be wiped as well as to any vehicle cleaning device comprising at least two sets of nozzles.

## Claims

1. System for distributing washing liquid in a cleaning device comprising two sets of nozzles, which system includes a first secondary pipe (6) and a second secondary pipe (7) for feeding the washing liquid to the nozzles, which first and second secondary pipes, hydraulically connected to a main pipe (3) extending from a washing liquid tank (4), each include at least one circulation tube (11, 12) for the washing liquid and a conductive element (13) embedded in its mass, **characterized in that** at least one heat dissipator apparatus (15) is provided in at least one of the two secondary pipes.

2. System according to Claim 1, **characterized in that** the first secondary pipe (6) is shorter than the second secondary pipe (7) because of the relative position of the corresponding nozzles relative to the main pipe, said at least one heat dissipator apparatus (15) being provided on at least the shorter first secondary pipe (6).

3. System according to Claim 1 or 2, **characterized in that** the conductive element (13) of the first pipe (6) and the conductive element of the second pipe (7) have the same resistivity.

4. System according to any one of the preceding claims, **characterized in that** the heat dissipator apparatus (15) disposed on the at least one of the two secondary pipes is configured to modify the power per unit length of said secondary pipe.

5. System according to any one of the preceding claims, **characterized in that** the heat dissipator apparatus (15) is a resistance (15) so as to confer a greater total resistance on the first pipe (6) relative to the second pipe (7).

6. System according to the preceding claim, **characterized in that** the value of the resistance (15) is chosen taking into account the resistivity and the respective length of the first and second heating conductors (13) in order to obtain a power per unit length of the first heating pipe (6) and the second heating pipe (7) between 25 watts per metre and 40 watts per metre inclusive.

7. System according to Claim 5, **characterized in that** the value of the resistance (15) is chosen taking into account the resistivity and the respective length of the first and second heating conductors (13) in order to obtain a resistance per unit length of the first heating pipe (6) and the second heating pipe (7) of approximately 30 watts per metre.

8. System according to any one of Claims 1 to 4, **characterized in that** the heat dissipator apparatus (15) is a positive temperature coefficient stone.

9. System according to any one of the preceding claims, **characterized in that** the heat evacuated by the heat dissipator apparatus (15) is recovered to heat at least one element of said system for distributing washing liquid (14).

10. Assembly comprising a cleaning device and a system for distributing washing liquid according to any one of the preceding claims.

11. Assembly according to the preceding claim, **characterized in that** the cleaning device is a wiper device comprising two wipers (9), each wiper (9) including at least one sprayer ramp carrying a nozzle and
**in that** each of the first pipe (6) and the second pipe (7) includes at least one tube (11, 12) for circulating the liquid to feed said at least one sprayer ramp of the wiper (9) concerned with windscreen washer liquid.

12. Motor vehicle **characterized in that** it is equipped with at least one system for distributing washing liquid according to any one of Claims 1 to 9.
